# EUROPEAN PATENT SPECIFICATION

(11) **EP 3 015 593 B1**
(45) Date of publication and mention of the grant of the patent: **25.09.2019**
(21) Application number: 15191431.4
(22) Date of filing: 26.10.2015
(51) Int. Cl.: D06F 58/20, D06F 58/22, D06F 39/10

(54) **LAUNDRY TREATING APPARATUS**
WÄSCHEBEHANDLUNGSVORRICHTUNG
APPAREIL DE TRAITEMENT DU LINGE

(30) Priority: 28.10.2014 KR 20140147298
(43) Date of publication of application: 04.05.2016
(60) Divisional application: 19191302.9
(73) Proprietor: LG Electronics Inc., Seoul 07336 (KR)
(72) Inventor: KIM, Hyojun, 08592 Seoul (KR); HONG, Sangwook, 08592 Seoul (KR); KIM, Youngsuk, 08592 Seoul (KR)
(74) Representative: Ter Meer Steinmeister & Partner

(56) References cited:
- EP-A1- 2 039 819
- WO-A1-2014/038112
- WO-A1-2014/169955
- DE-A1-102008 054 832
- DE-A1-102010 039 602
- DE-A1-102014 204 299
- JP-A- 2006 187 449
- KR-A-020070 076 853
- US-A1- 2004 221 474
- US-A1- 2008 276 656

## Description

### BACKGROUND

### 1. Field

A laundry treating apparatus is disclosed herein.

### 2. Background

A laundry treating apparatus includes an apparatus for washing or drying laundry, and an apparatus for washing and drying laundry. A laundry treating apparatus capable of drying laundry is configured to supply air at a high temperature (hot blast) to laundry, which may be classified into an exhaust type and a circulation type (condensation type) according to an air flow method.

The circulation type laundry treating apparatus includes structure to circulate air inside of a laundry accommodation unit or device in which laundry is placed. With this structure, air discharged from the laundry accommodation device is heated after moisture is removed (dehumidifying) from the air, and then the air is re-supplied to the laundry accommodation device.

The exhaustion type laundry treating apparatus includes structure to supply heated air to a laundry accommodation device. With this structure, air discharged from the laundry accommodation device is discharged outside of the laundry treating apparatus, without being circulated.

In the circulation type laundry treating apparatus, air is suctioned from a tub. In this case, heat exchange efficiency is lowered when air at a high temperature (hot blast) is supplied, due to foreign materials. Thus, the circulation type laundry treating apparatus is provided with a filter.

The conventional laundry treating apparatus is not provided with a heat exchanger to heat air and then supply the air at a high temperature (hot blast), and means to clean the aforementioned filter. Thus, heat exchange efficiency may be lowered.

DE 10 2008 054832 A1 describes a laundry machine having a heat exchanger and a filter. A condensate container is arranged above the heat exchanger and filter. A magnet valve can be used to discharge the condensate from the condensate container for cleaning of the heat exchanger or filter.

WO 2014/038112 A1 describes a clothes dryer. A condenser and an evaporator are provided. A cleaning unit is provided between the condenser and the evaporator to remove lint therefrom.

### SUMMARY OF THE INVENTION

Therefore, an object of the present invention is to provide a laundry treating apparatus capable of cleaning a filter unit for filtering air supplied to a heat exchange unit, and the heat exchange unit. The object is solved by the features of the independent claim.

To achieve these and other advantages and in accordance with the purpose of this specification, as embodied and broadly described herein, there is provided a laundry treating apparatus, preferably including: a laundry accommodation unit configured to provide a space where laundry is accommodated; a circulation passage provided outside the laundry accommodation unit, and providing a space where air circulates via the inside of the laundry accommodation unit; a heat exchange unit provided in the circulation passage; a filter unit disposed in the circulation passage, and configured to filter foreign materials introduced into the heat exchange unit; and a washing unit disposed between the heat exchange unit and the filter unit, and configured to spray washing water to each of the heat exchange unit and the filter unit.

The filter unit includes a filter frame provided at the circulation passage, and a filter provided at the filter frame, and configured to filter foreign materials.

The filter frame includes a body arranged to have an inclination angle from a straight line perpendicular to a bottom surface of the circulation passage, a guider provided on a lower surface of the body and configured to guide washing water sprayed by the washing unit, and an open surface provided at the end of the guider and configured to communicate the guider with a discharge duct.

The guider is further provided with an inclined surface provided on a lower surface of the guider, and inclined toward the open surface.

The discharge duct may be configured to communicate with a drain unit provided at a tub of the laundry accommodation unit.

The washing unit may include a nozzle body; and one or more nozzle holes provided at each of both side surfaces of the nozzle body which face the heat exchange unit and the filter unit, and configured to spray washing water.

The washing unit may further include a water supply unit configured to supply washing water into the nozzle body. The water supply unit may further include a divergence pipe configured to diverge washing water to a nozzle hole facing the heat exchange unit, and a nozzle hole facing the filter unit.

The washing unit may include a heat exchange unit washing portion configured to spray washing water toward the heat exchange unit, a filter unit washing portion configured to spray washing water toward the filter unit, and a water supply unit configured to supply washing water to the washing unit.

The water supply unit may include a first water supply unit configured to supply washing water to the heat exchange unit washing portion, and a second water supply unit configured to supply washing water to the filter unit washing portion.

The first water supply unit and the second water supply unit may be operated independently.

According to the present disclosure, there is also provided a method of controlling a laundry treating apparatus comprising a heat exchange unit disposed in a circulation passage which provides a space such that air circulates via the inside of a laundry accommodation unit; a filter unit configured to filter foreign materials introduced into the heat exchange unit; and a washing unit disposed between the heat exchange unit and the filter unit, and configured to pray washing water to each of the heat exchange unit and the filter unit, the method including an intermediate washing step of washing the heat exchange unit and the filter unit.

The intermediate washing step may be executed before or after at least one of a washing step of washing laundry, a rinsing step of rinsing laundry, a dehydration step of dehydrating laundry, and a drying step of drying laundry.

The intermediate washing step may include an intermediate washing determination step of determining whether to execute the intermediate washing step or not; a power-off step of turning off a blower and the heat exchange unit when it is determined in the intermediate washing determination step that the intermediate washing step is to be executed; a washing water spraying step of spraying washing water to the heat exchange unit and the filter unit by the washing unit, after the power-off step; a power-on step of turning on again the blower and the heat exchange unit, after the washing water spraying step.

In the present invention, the laundry treating apparatus can clean the filter unit for filtering air supplied to the heat exchange unit, and the heat exchange unit.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

Embodiments will be described in detail with reference to the following drawings in which like reference numerals refer to like elements, and wherein:

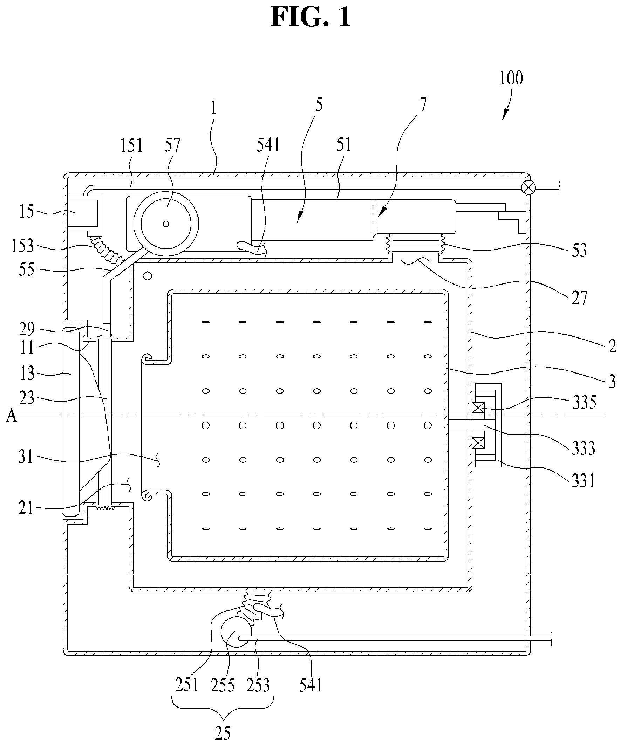

FIGS. 1 and 2 are cross-sectional and perspective views of a laundry treating apparatus according to an embodiment;
FIGS. 3, 4A and 4B are views of a heat exchanger of the laundry treating apparatus of Fig. 1;
FIGS. 5 and 6A to 6C are views illustrating a duct including a filter device and the heat exchanger of the laundry treating apparatus of Fig. 1;
FIGS. 7A to 7D are views illustrating a washer of the laundry treating apparatus of Fig. 1; and

A gasket 23 may be provided between the tub introduction opening 21 and the introduction opening 11. The gasket 23 may prevent washing water stored in the tub 2 from leaking outside of the tub 2, and prevent vibrations from the tub 2 from being transmitted to the cabinet 1 when the drum 3 is rotated. Thus, the gasket 23 may be a vibration isolation member, and may be formed of rubber.

The tub 2 may be installed such that a central longitudinal axis of the tub 2 extends parallel to a ground surface on which the cabinet 1 is supported, or may be installed with a predetermined inclination angle with respect to the ground surface. If the tub 2 is installed with an inclination of a predetermined angle with respect to the ground surface, the predetermined inclination angle may be less than about 90°.

An exhaust unit or device 27, through which air inside the tub 2 may be discharged, may be provided at an upper portion of a circumferential surface of the tub 2. A drain unit or device 25 that discharges the washing water stored in the tub 2 may be provided at a lower portion of the tub 2.

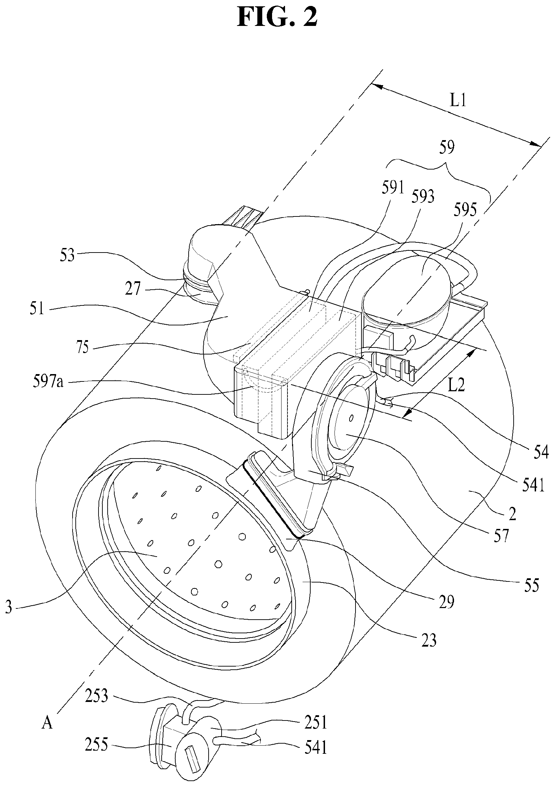

The exhaust device 27 may be provided in the tub 2. The exhaust device 27 may be spaced a predetermined distant from a straight line (A) that passes through a center of the tub 2, for example, a predetermined distance (L1) (refer to FIG. 2). The reason is to easily discharge air inside of the tub 2 from the tub 2 through the exhaust device 27 when the drum 3 is rotated.

The drain device 25 may include a drain pump 255, a first drain pipe 251 that connects the drain pump 255 with the tub 2, and a second drain pipe 253 that guides washing water introduced into the drain pump 255 outside of the cabinet 1.

The tub 2 may be supplied with washing water through a water supply pipe 151 that connects the tub 2 with a water supply source. If a detergent supply unit or device 15 that supplies detergent to the tub 2 is provided at the cabinet 1, the water supply pipe 151 may be provided to supply washing water to the detergent supply device 15. In this case, the washing water supplied to the detergent supply device 15 may be supplied to the tub 2 through a detergent supply pipe 153.

The drum 3 may have a hollow cylindrical shape, and may be provided in the tub 2. The drum 3 may be rotatable by a drive provided outside of the tub 2. In this case, the drive may include a stator 335 fixed to a rear surface of the tub 2, a rotor 331 rotated by an electromagnetic operation with the stator 335, and a rotational shaft 333 that connects a rear surface of the drum 3 with the rotor 331 by passing through the rear surface of the tub 2.

A drum introduction opening 31, which may communicate with the introduction opening 11 and the tub introduction opening 21, may be provided on a front side of the drum 3. With such a configuration, a user may put laundry into the drum 3 through the introduction opening 11, or may withdraw laundry within the drum 3 outside of the cabinet 1.

As shown in FIG. 2, the hot blast supply device 5 may include circulation passages 51, 53, and 55 that guide air discharged from the inside of the tub 2 to a front side of the tub 2, a blower 57 provided at or in the circulation passages 51, 53, and 55 that circulates air inside of the tub 2, and a heat exchange unit or heat exchanger 59 provided in the circulation passages 51, 53, and 55. The circulation passages 51, 53, and 55 may include a first connection duct 53 connected to a rear side of the tub 2, a duct 51 connected to the first connection duct 53 and having the heat exchanger 59 provided therein or thereon, and a second connection duct 55 that guides air discharged from the duct 51 to a front side of the tub 2.

The first connection duct 53 may be a passage connected to the exhaust device 27 provided on or at a rear side of the circumferential surface of the tub 2, and may be a vibration isolation member, and may be formed of rubber. This may prevent vibrations transmitted to the tub 2 from being transmitted to the heat exchanger 59 provided in the duct 51 through the first connection duct 53 when the drum 3 is rotated.

The first connection duct 53 may include a bellows, in order to effectively prevent transmission of vibrations generated from the tub 2, to the duct 51 and the heat exchanger 59. The second connection duct 55 may be connected to any point on the tub 2, if air discharged from the duct 51 is guided to a front side of the tub 2. FIG. 2 illustrates a case in which the second connection duct 55 supplies air into the tub 2 through the gasket 23. In this case, a supply unit or device 29 that communicates with the second connection duct 55 may be further provided at the gasket 23.

The blower 57 may be provided at the second connection duct 55. The blower 57 may include an impeller (not shown) provided in the second connection duct, and an impeller motor (not shown) that rotates the impeller.

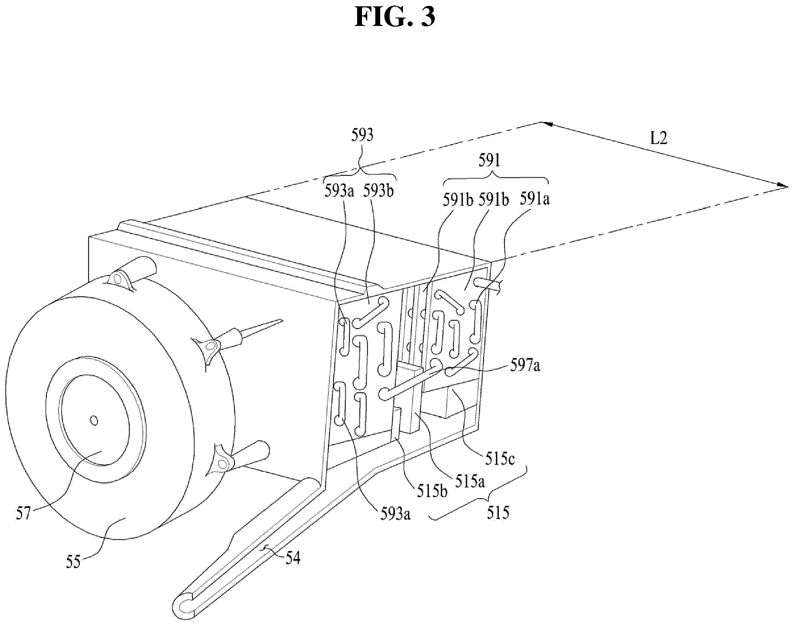

FIG. 3 illustrates that the heat exchanger 59 provided in the clothes treating apparatus according to embodiments may be a heat pump. A first heat exchanger 591 (evaporator) and a second heat exchanger 593 (condenser) provided at the heat exchanger 59 may be fixed to an inside of the duct 51, and a compressor 595 may be provided to supply a refrigerant discharged from the evaporator 591 to the condenser 593 after compressing the refrigerant. The refrigerant supplied to the condenser 593 may be re-supplied to the evaporator 591 via an expansion device 597.

The evaporator 591 may include first heat exchange plates 591b, and first refrigerant pipes 591a fixed to the first heat exchange plates 591b. For example, the first heat exchange plates 591b may include a plurality of metallic plates fixed in parallel in a lengthwise direction of the circulation passages (a moving direction of air). In this case, the first heat exchange plates 591b may be spaced from each other by a predetermined distance, in a widthwise direction (L2) of the circulation passages. The first refrigerant pipes 591a, which provide a moving path of a refrigerant, may be fixed to the first heat exchange plates 591b.

The evaporator 591 may evaporate a refrigerant after the refrigerant absorbs heat from air introduced into the duct 51. Thus, the evaporator 591 may serve as a means to remove moisture contained in air by cooling the air.

The duct 51 may further include a condensate water discharge unit or device 54 that discharges moisture removed from air (condensate water) by the evaporator 591 outside of the circulation passages. The condensate water discharge device 54 may be connected to the drain device 25 by a discharge pipe 541.

The condenser 593 may condense a refrigerant. Heat generated while a refrigerant is condensed may be transmitted to air passing through the condenser 593. Thus, the condenser 593 may serve as a means to heat air which has passed through the evaporator 591. The condenser 593 may include second heat exchange plates 593b, and second refrigerant pipes 593a fixed to the second heat exchange plates 593b.

The evaporator 591 and the condenser 593 may be fixed to a first mounting unit or device 515 provided in the duct 51. The first mounting device 515 may include a first supporting portion 515c that supports a lower surface of the evaporator 591, a second supporting portion 515b that supports a lower surface of the condenser 593, and a partition wall 515a provided between the evaporator 591 and the condenser 593. Such a configuration may prevent moisture removed from air passing through the evaporator 591 (condensate water) from moving to the condenser 593, and allow the condensate water to easily flow to the condensate water discharge device 54.

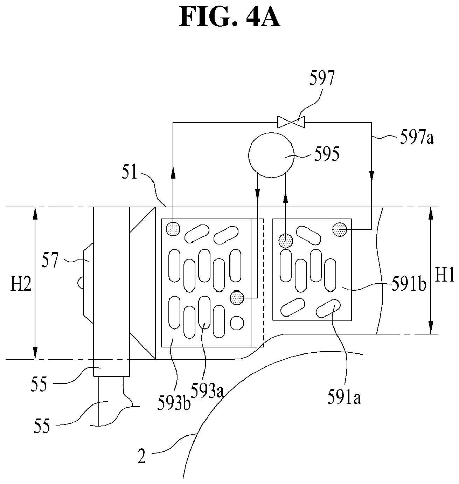

As shown in FIG. 4A, as the circulation passages 51, 53, and 55 may be positioned above the circumferential surface of the tub 2, and a space in which the evaporator 591 is positioned and a space in which the condenser 593 is positioned may have different volumes. If a duct height (H1) of a region in which the evaporator 591 is fixed is different from a duct height (H2) of a region in which the condenser 593 is fixed, a heat exchange amount of the evaporator 591 may be different from a heat exchange amount of the condenser 593. In this case, it may be difficult to solve such a difference between the heat exchange amount of the evaporator 591 and the heat exchange amount of the condenser 593, by merely increasing a volume of the evaporator 591 or the condenser 593, because the volume of the evaporator 591 or the condenser 593 is restricted by a shape of the duct 51.

More specifically, referring to FIG. 4A, it is difficult to increase a length of the second heat exchange plate 593b without changing a shape of the duct 51. The reason is because the second heat exchange plate 593b may interfere with the duct 51 even when a length of the second heat exchange plate 593b is increased toward the evaporator 591, for an increased volume of the condenser 593.

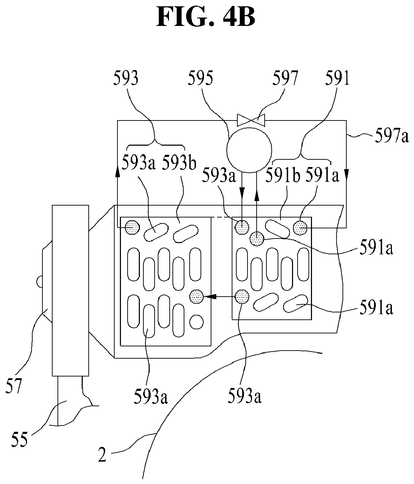

In order to solve such a problem, the condenser 593 may be formed such that a portion of its refrigerant pipes is fixed to the first heat exchange plates 591b of the evaporator 591. As shown in FIG. 4B, the evaporator 591 may include the first heat exchange plates 591b and the first refrigerant pipes 591a fixed to the first heat exchange plates 591b. The condenser 593 may include the second heat exchange plates 593b that exchange heat with air having passed through the first heat exchange plates 591b, and the second refrigerant pipes 593a fixed to the second heat exchange plates 593b. In this case, a portion of the second refrigerant pipes 593a may be fixed to the first heat exchange plates 591b of the evaporator 591.

More specifically, a refrigerant, which has passed through the first heat exchange plates 591b via the first refrigerant pipes 591a, may be introduced into the second refrigerant pipe 593a via the compressor 595. The second refrigerant pipe 593a may pass through the first heat exchange plates 591b and the second heat exchange plates 593b, sequentially. With such a structure, a length of the second refrigerant pipes 593a may be increased, and thus, a heat exchange amount of the evaporator 591 may become equal to a heat exchange amount of the condenser 593. Further, the refrigerant, discharged from the second heat exchange plates 593b through the second refrigerant pipes 593a, may be re-supplied to the first refrigerant pipes 591a via a connection pipe 597a and the expansion device 597.

The laundry treating apparatus 100 may further include a filter unit or device 7 that prevents lamination of foreign materials on the heat exchanger 59, by filtering air introduced into the circulation passages 51, 53, and 55 after being discharged from the tub 2.

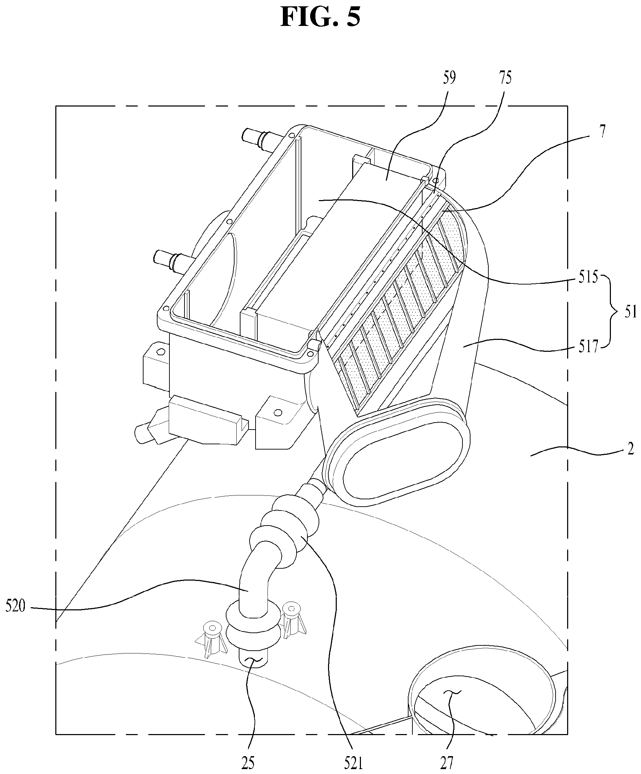

FIG. 5 illustrates the duct 51 including the heat exchanger 59 and the filter device 7 according to one embodiment. The duct 51 may include the first mounting device 515, on which the heat exchanger 59 may be mounted, and a second mounting unit or device 517, on which the filter device 7 may be mounted.

The heat exchanger 59 may include the first heat exchanger 591 (evaporator) that evaporates refrigerant, the second heat exchanger 593 (condenser) that condenses refrigerant, and the compressor 595 that compresses refrigerant discharged from the evaporator 591 and supplies the refrigerant to the condenser 593. The evaporator 591 and the condenser 593 provided at the heat exchanger 59 may be fixed to the inside of the duct 51, and the compressor 595 may compress refrigerant discharged from the evaporator 591 and supply the refrigerant to the condenser 593. The refrigerant supplied to the condenser 593 may be re-supplied to the evaporator 591 via the expansion device 597.

The evaporator 591 may evaporate refrigerant after the refrigerant absorbs heat from air introduced into the duct 51. Thus, the evaporator 591 may serve as a means to remove moisture contained in air by cooling the air.

The condenser 593 may condense refrigerant. Heat generated while the refrigerant is condensed maybe transmitted to air passing through the condenser 593. Thus, the condenser 593 may be a means to heat air which has passed through the evaporator 591.

The filter device 7 may be provided at or on the second mounting device 517 of the duct 51, and a washer 75 that washes the filter device 7 and the heat exchanger 59 may be provided between the filter device 7 and the heat exchanger 59. The washer 75, provided between the filter device 7 and the heat exchanger 59, may spray washing water or water to or onto the filter device 7 and the heat exchanger 59. With such a configuration, both the filter device 7 and the heat exchanger 59 may be cleaned.

Washing water, which has been used to remove foreign materials on surfaces of the filter device 7 and the heat exchanger 59, after being sprayed from the washer 75 towards the filter device 7 and the heat exchanger 59, may be discharged outside through a discharge duct 520 provided at the duct 51.

As discussed above, vibrations may occur from the duct 51 having therein the heat exchanger 59 and the blower 57 (refer to FIG. 2). In order to prevent vibrations generated from the duct 51 from being transmitted to the tub 2, the discharge duct 520 may be provided with a bellows 521. The washing water, which has been used to clean the filter device 7 and the heat exchanger 59, after being sprayed from the washer 75, may be discharged outside through the discharge duct 520, via the drain device 25 provided at the tub 2. Alternatively, the washing water may be discharged outside through the exhaust device 27 and the supply device 29 each provided on an outer circumferential surface of the tub 2. The washing water may be discharged outside through any opening (not shown) provided at the tub 2, if the opening communicates with the drain device 25 on the outer circumferential surface of the tub 2.

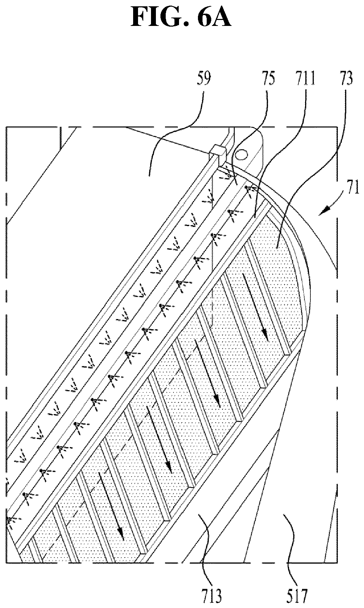

FIGS. 6A to 6C illustrate the filter device 7 of the laundry treating apparatus according to an embodiment. Referring to FIG. 6A, the filter device 7 may include a filter frame 71 provided at the second mounting device 517, a filter 73 provided at the filter frame 71 to filter foreign materials, and the washer 75 to wash (clean) the heat exchanger 59 and the filter device 7 by spraying washing water to the heat exchanger 59 and the filter device 7.

The filter frame 71 may include a body 711, a guider 713 provided on a lower surface of the body 711 to guide foreign materials having passed through the filter 73, and an open surface 715 provided at an end of the guider 713 to communicate the guider 713 with the discharge duct 520.

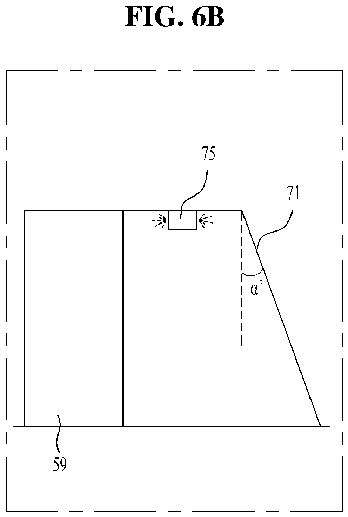

FIG. 6B illustrates a side surface of the filter device 7 provided in the duct 51 according to an embodiment. The body 711 of the filter device 7 may be arranged to have an angle of α° from a straight line (X) perpendicular to a lower surface of the duct 51. The body 711 may be inclined in order to allow washing water sprayed from the washer 75 to easily flow down along the filter frame 71 and the filter 73 (mesh) and reach the guider 713.

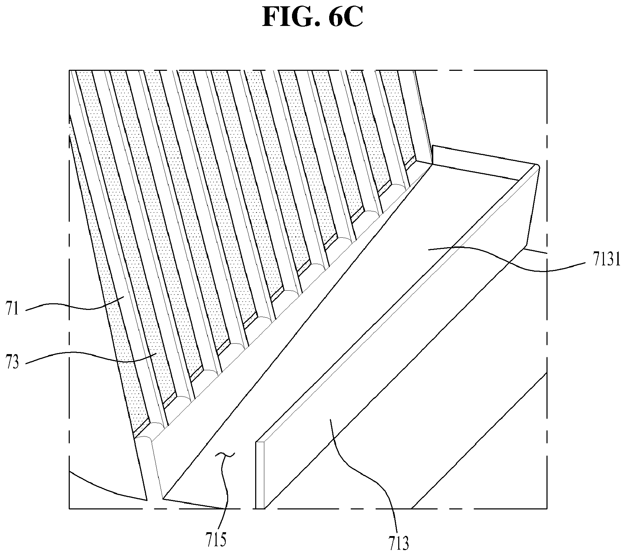

Referring to FIG. 6C, the guider 713 may be further provided with an inclined surface 7131 inclined toward the open surface 715. Due to the inclined surface 7131, washing water and foreign materials, which have passed through the filter 73, may be more easily discharged toward the discharge duct 520.

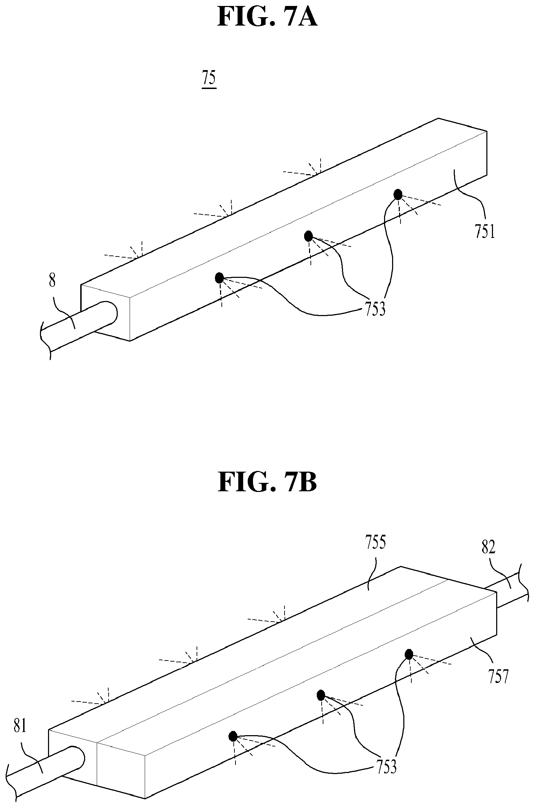

FIGS. 7A to 7D illustrates the washer 75 and a water supply unit or device 8 according to an embodiment. The washer 75 may include a nozzle body 751, and one or more nozzle holes 753 provided at the nozzle body 751 to spray washing water.

Referring to FIG. 7A, the washer 75 may be provided with a single nozzle body 751, and the nozzle body 751 may be provided with one or more nozzle holes 753 on a surface that faces the heat exchanger 59 and the filter device 7. The water supply device 8, provided to supply washing water, may be further provided at the nozzle body 751.

Referring to FIG. 7B, the washer 75 may include a heat exchanger washing portion 755 to spray washing water toward the heat exchanger 59, and a filter washing portion 757 to spray washing water toward the filter 73. The heat exchanger washing portion 755 may include one or more nozzle holes 753 provided on a surface thereof facing toward the heat exchanger 59. The one or more nozzle holes 753 may spray washing water toward the heat exchanger 59. The filter washing portion 757 may include one or more nozzle holes 753 provided on a surface thereof facing toward the filter device 7. The one or more nozzle holes 753 may spray washing water toward the filter device 7.

A first water supply device 81 to supply washing water to the heat exchanger washing portion 755, and a second water supply device 82 to supply washing water to the filter washing portion 757, may be further provided. Unlike in FIG. 7A, as shown in FIG. 7B, as the first water supply device 81 and the second water supply device 82 are independently provided unlike in FIG. 7A, water supply may be independently executed on the heat exchanger washing portion 755 and the filter washing portion 757.

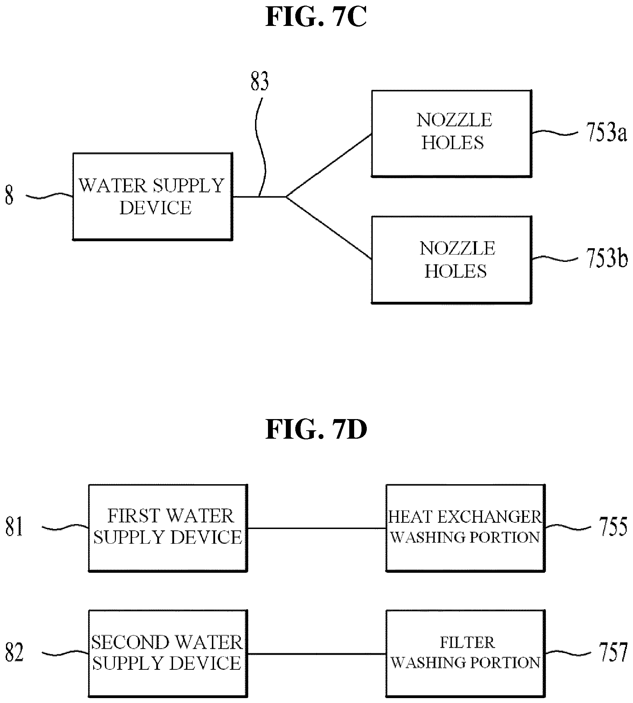

FIG. 7C and 7D illustrate the water supply device 8, the heat exchanger washing portion 755, and the filter washing portion 757 according to an embodiment. Referring to FIG. 7C, washing water supplied from the water supply device 8 may be transferred to one or more nozzle hole(s) 753a that face the heat exchanger 59, and one or more nozzle hole(s) 753b that face the filter device 7, by a divergence pipe 83. Referring to FIG. 7D, according to another embodiment, the water supply device 8 may further include the first water supply device 81 to supply washing water to the heat exchanger washing portion 755, and the second water supply device 82 to supply washing water to the filter washing portion 757. The first water supply device 81 and the second water supply device 82 may be provided so as to be controlled independently.

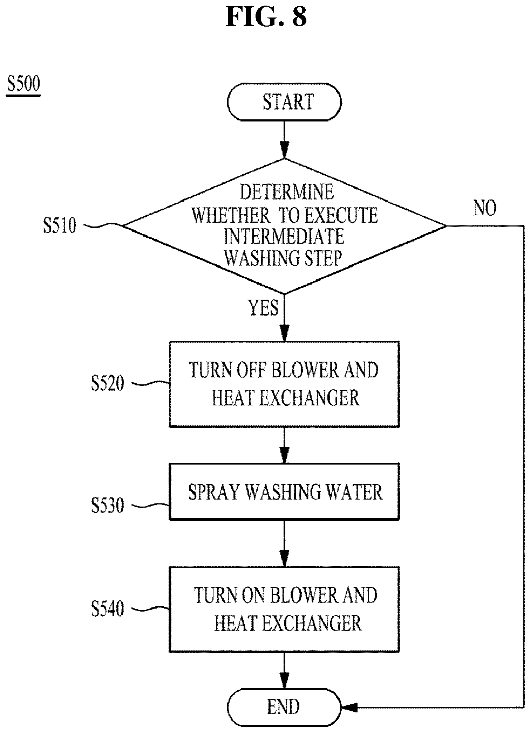

FIG. 8 is a view illustrating control of the washer 75 provided at a laundry treating apparatus according to an embodiment. Generally, a laundry treating apparatus executes a washing step or operation of supplying washing water and a detergent into the tub 2, and washing laundry by rotating the drum 3, a rinsing step or operation of removing the detergent included in the laundry after the washing step or operation, a dehydration step or operation of removing moisture included in the laundry after the rinsing step, and a drying step or operation of drying the laundry.

An intermediate washing step or operation, S500, according to an embodiment may be executed before or after each of the washing step or operation, the rinsing step or operation, the dehydration step or operation, and the drying step or operation. Further, the intermediate washing step or operation, S500, may be performed a plurality of times, rather than a single time (once).

The intermediate washing step or operation, S500, may include an intermediate washing determination step or operation, S510, of determining whether to execute the intermediate washing step, S500, or not according to a user's input or a control method input to a controller. The intermediate washing step or operation, S500, may further include a power-off step or operation, S520, of turning off the blower 57 and the heat exchanger 59 when it is determined in the intermediate washing determination step or operation, S510, that the intermediate washing step or operation, S500, is to be executed.

The intermediate washing step or operation, S500, may further include a washing water spraying step or operation, S530, of spraying washing water to the heat exchanger 59 and the filter device 7 by the washer 75, after the blower 57 and the heat exchanger 59 are turned off in the power-off step or operation, S520. The intermediate washing step or operation, S500, may further include a power-on step or operation, S540, of turning on again the blower 57 and the heat exchanger 59, which have been turned off in the power-off step or operation, S520, after the washing water spraying step or operation, S530.

Therefore, embodiments disclosed herein provide a laundry treating apparatus capable of cleaning a filter device that filters air supplied to a heat exchanger, and the heat exchanger.

Embodiments disclosed herein provide a laundry treating apparatus that may include a laundry accommodation unit or device configured to provide a space where laundry may be accommodated; a circulation passage provided outside of the laundry accommodation unit, and providing a space where air circulates via an inside of the laundry accommodation unit; a heat exchange unit or heat exchanger provided in the circulation passage; a filter unit or device disposed or provided in the circulation passage, and configured to filter foreign materials introduced into the heat exchange unit; and a washing unit or washer disposed or provided between the heat exchange unit and the filter unit, and configured to spray washing water to each of the heat exchange unit and the filter unit. The filter unit may include a filter frame provided at the circulation passage, and a filter provided at the filter frame, and configured to filter foreign materials.

The filter frame may include a body arranged to have an inclination angle from a straight line perpendicular to a bottom surface of the circulation passage, a guider provided on a lower surface of the body and configured to guide washing water sprayed by the washing unit, and an open surface provided at the end of the guider and configured to communicate the guider with a discharge duct. The guider may be further provided with an inclined surface provided on a lower surface of the guider, and inclined toward the open surface. The discharge duct may be configured to communicate with a drain unit or drain provided at a tub of the laundry accommodation unit.

The washing unit may include a nozzle body, and one or more nozzle holes provided at each of both side surfaces of the nozzle body that face the heat exchange unit and the filter unit, and configured to spray washing water. The washing unit may further include a water supply unit or device configured to supply washing water into the nozzle body. The water supply unit may further include a divergence pipe configured to diverge washing water to a nozzle hole that faces the heat exchange unit, and a nozzle hole that faces the filter unit.

The washing unit may include a heat exchange unit washing portion configured to spray washing water toward the heat exchange unit, a filter unit washing portion configured to spray washing water toward the filter unit, and a water supply unit or device configured to supply washing water to the washing unit. The water supply unit may include a first water supply unit or device configured to supply washing water to the heat exchange unit washing portion, and a second water supply unit or device configured to supply washing water to the filter unit washing portion. The first water supply unit and the second water supply unit may be operated independently.

Embodiments disclosed herein provide a method for controlling a laundry treating apparatus including a heat exchange unit or heat exchanger disposed or provided in a circulation passage that provides a space such that air circulates via inside of a laundry accommodation unit or device; a filter unit or device configured to filter foreign materials introduced into the heat exchange unit; and a washing unit or washer disposed or provided between the heat exchange unit and the filter unit, and configured to spray washing water to each of the heat exchange unit and the filter unit. The method may include an intermediate washing step or operation of washing the heat exchange unit and the filter unit.

The intermediate washing step may be executed before or after at least one of a washing step or operation of washing laundry, a rinsing step or operation of rinsing laundry, a dehydration step or operation of dehydrating laundry, and a drying step or operation of drying laundry. The intermediate washing step may include an intermediate washing determination step or operation of determining whether to execute the intermediate washing step or not; a power-off step or operation of turning off a blower and the heat exchange unit when it is determined in the intermediate washing determination step that the intermediate washing step is to be executed; a washing water spraying step or operation of spraying washing water to the heat exchange unit and the filter unit by the washing unit, after the power-off step; a power-on step or operation of turning on again the blower and the heat exchange unit, after the washing water spraying step.

Embodiments disclosed herein provide a laundry treating apparatus that can clean a filter device that filters air supplied to a heat exchanger, and the heat exchanger.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the appended claims. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A laundry treating apparatus (100), comprising:
a laundry accommodation device (2, 3) that provides a space for laundry to be accommodated;
a circulation passage (51, 53, 55) provided outside of the laundry accommodation device (2, 3), and providing a space in which air circulates to an inside of the laundry accommodation device (2, 3);
a heat exchanger (59) provided in the circulation passage (51);
a filter device (7) provided in the circulation passage (51), that filters foreign materials introduced to the heat exchanger (59); and **characterized in that**
a washer (75) is provided between the heat exchanger (59) and the filter device (7), that sprays washing water onto each of the heat exchanger (59) and the filter device (7),
wherein the filter device (7) includes a filter frame (71) provided at the circulation passage (51) and a filter (73) provided at the filter frame (71), that filters foreign materials, wherein the filter frame (71) includes:
a body (711) arranged at an inclination angle from a straight line perpendicular to a bottom surface of the circulation passage (51);
a guider (713) provided on a lower surface of the body (711), that guides washing water sprayed by the washer (75); and
an open surface (715) provided at an end of the guider (713) by which the guider (713) communicates with a discharge duct (520), wherein the guider (713) includes an inclined surface (7131) provided on a lower surface of the guider (731) and inclined toward the open surface (715).

2. The laundry treating apparatus of claim 1, wherein the discharge duct (520) communicates with at least one of a drain device (25), an exhaust device (27), and a supply device (29), which are provided at a tub (2) of the laundry accommodation device (2, 3).

3. The laundry treating apparatus of any one of claims 1 to 2, wherein the washer (75) includes:
a nozzle body (751); and
one or more nozzle hole (753) that spray washing water provided at each of both side surfaces of the nozzle body (751) to face the heat exchanger (59) and the filter device (7).

4. The laundry treating apparatus of claim 3, wherein the washer (75) further includes a water supply device (8) that supplies washing water into the nozzle body (751), and wherein the water supply device (8) further includes a divergence pipe (83) that diverts washing water to one or more nozzle hole (753) that faces the heat exchanger (59), and one or more nozzle hole (753) that faces the filter device (7).

5. The laundry treating apparatus of claim 1, wherein the washer (75) includes:
a heat exchanger washing portion (755) that sprays washing water toward the heat exchanger (59);
a filter washing portion (757) configured to spray washing water toward the filter device (7); and
a water supply device (81, 82) that supplies washing water to the washer (75).

6. The laundry treating apparatus of claim 5, wherein the water supply device (81, 82) includes:
a first water supply device (81) that supplies washing water to the heat exchanger washing portion (755); and
a second water supply device (82) that supplies washing water to the filter washing portion (757).

7. The laundry treating apparatus of claim 6, wherein the first water supply device (81) and the second water supply device (82) are operated independently.

8. The laundry treating apparatus of any one of claims 1 to 7, wherein the heat exchanger (59) includes:
at least one first heat exchange plate (591b) that exchanges heat with air inside of the circulation passage (51);
at least one first refrigerant pipe (591a) fixed to the at least one first heat exchange plate (591b);
at least one second heat exchange plate (593b) provided in the circulation passage (51), that exchanges heat with air which has passed through the at least one first heat exchange plate (591b);
at least one second refrigerant pipe (593a) fixed to the at least one first heat exchange plate (591b) and to the at least one second heat exchange plate (593b);
a compressor (595) that supplies a refrigerant discharged from the at least one first refrigerant pipe (591a) to the at least one second refrigerant pipe (593a), in a compressed manner; and
an expansion device (597) that moves the refrigerant discharged from the at least one second refrigerant pipe (593a), to the at least one first refrigerant pipe (591a), after lowering a pressure of the refrigerant.

9. The laundry treating apparatus of claim 8, wherein the circulation passage (51) includes:
a first mounting device (515) that supports the heat exchanger (59); and
a second mounting device (517) that supports a lower end of the filter frame (71), wherein the second mounting device (517) is provided at a higher position than a position of the first mounting device (515).

10. The laundry treating apparatus of claim 9, wherein the circulation passage (51, 53, 55) further includes:
a drain device (25) that discharges the water inside of the laundry accommodation device (2, 3); and
a discharge pipe (541) that connects the first mounting device (515) with the drain device (25).

## Patentansprüche

1. Wäschebehandlungsvorrichtung (100), umfassend:
eine Wäscheaufnahmevorrichtung (2, 3), die einen Raum zum Aufnehmen von Wäsche vorsieht;
einen Zirkulationskanal (51, 53, 55), der außerhalb der Wäscheaufnahmevorrichtung (2, 3) vorgesehen ist und einen Raum vorsieht, in dem Luft zu einem Inneren der Wäscheaufnahmevorrichtung (2, 3) zirkuliert;
einen Wärmetauscher (59), der in dem Zirkulationskanal (51) vorgesehen ist;
eine Filtervorrichtung (7), die in dem Zirkulationskanal (51) vorgesehen ist, die in den Wärmetauscher (59) eingebrachte Fremdstoffe filtert; und
**dadurch gekennzeichnet, dass**
ein Wäscher (75) zwischen dem Wärmetauscher (59) und der Filtervorrichtung (7) vorgesehen ist, der Waschwasser jeweils auf den Wärmetauscher (59) und die Filtervorrichtung (7) aufsprüht,
wobei die Filtervorrichtung (7) einen Filterrahmen (71), der an dem Zirkulationskanal (51) vorgesehen ist, und ein Filter (73), das an dem Filterrahmen (71) vorgesehen ist, das Fremdstoffe filtert, aufweist, wobei der Filterrahmen (71) aufweist:
einen Körper (711), der in einem Neigungswinkel von einer geraden Linie senkrecht zu einer Bodenfläche des Zirkulationskanals (51) angeordnet ist;
eine Führung (713), die an einer Unterseite des Körpers (711) vorgesehen ist und die von der Waschmaschine (75) versprühtes Waschwasser führt; und
eine offene Fläche (715), die an einem Ende der Führung (713) vorgesehen ist, durch die die Führung (713) mit einer Abgabeleitung (520) kommuniziert, wobei die Führung (713) eine geneigte Fläche (7131) aufweist, die an einer Unterseite der Führung (731) vorgesehen ist und zu der offenen Fläche (715) geneigt ist.

2. Wäschebehandlungsvorrichtung nach Anspruch 1, wobei die Abgabeleitung (520) mit mindestens eines von einer Ablaufvorrichtung (25), einer Ablassvorrichtung (27) und einer Zufuhrvorrichtung (29) kommuniziert, die an einer Wanne (2) der Wäscheaufnahmevorrichtung (2, 3) vorgesehen sind.

3. Wäschebehandlungsvorrichtung nach einem der Ansprüche 1 bis 2, wobei der Wäscher (75) aufweist:
einen Düsenkörper (751); und
eines oder mehrere Düsenlöcher (753), die Waschwasser sprühen, die an jeder von beiden Seitenflächen des Düsenkörpers (751) vorgesehen sind, um dem Wärmetauscher (59) und der Filtervorrichtung (7) zugewandt zu sein.

4. Wäschebehandlungsvorrichtung nach Anspruch 3, wobei der Wäscher (75) ferner eine Wasserzufuhrvorrichtung (8) aufweist, die Waschwasser in den Düsenkörper (751) zuführt, und wobei die Wasserzufuhrvorrichtung (8) ferner ein Divergenzrohr (83) aufweist, das Waschwasser zu einem oder mehreren Düsenlöchern (753), die dem Wärmetauscher (59) zugewandt sind, und einem oder mehreren Düsenlöchern (753), die der Filtervorrichtung (7) zugewandt sind, leitet.

5. Wäschebehandlungsvorrichtung nach Anspruch 1, wobei die Waschmaschine (75) aufweist:
einen Wärmetauscherwaschabschnitt (755), der Waschwasser in Richtung des Wärmetauschers (59) sprüht;
einen Filterwaschabschnitt (757), der konfiguriert ist, Waschwasser in Richtung der Filtervorrichtung (7) zu sprühen; und
eine Wasserzufuhrvorrichtung (81, 82), die der Waschmaschine (75) Waschwasser zuführt.

6. Wäschebehandlungsvorrichtung nach Anspruch 5, wobei die Wasserzufuhrvorrichtung (81, 82) aufweist:
eine erste Wasserzufuhrvorrichtung (81), die dem Wärmetauscherwaschabschnitt (755) Waschwasser zuführt; und
eine zweite Wasserzufuhrvorrichtung (82), die dem Filterwaschabschnitt (757) Waschwasser zuführt.

7. Wäschebehandlungsvorrichtung nach Anspruch 6, wobei die erste Wasserzufuhrvorrichtung (81) und die zweite Wasserzufuhrvorrichtung (82) unabhängig voneinander betrieben werden.

8. Wäschebehandlungsvorrichtung nach einem der Ansprüche 1 bis 7, wobei der Wärmetauscher (59) aufweist:
mindestens eine erste Wärmeaustauschplatte (591b), die Wärme mit Luft innerhalb dem Zirkulationskanals (51) austauscht;
mindestens ein erstes Kältemittelrohr (591a), das an der mindestens einen ersten Wärmetauschplatte (591b) befestigt ist;
mindestens eine zweite Wärmetauschplatte (593b), die in dem Zirkulationskanal (51) vorgesehen ist und die Wärme mit Luft austauscht, die durch die mindestens eine erste Wärmetauschplatte (591b) hindurchgegangen ist;
mindestens ein zweites Kältemittelrohr (593a), das an der mindestens einen ersten Wärmetauschplatte (591b) und an der mindestens einen zweiten Wärmetauschplatte (593b) befestigt ist;
einen Kompressor (595), der ein aus dem mindestens einen ersten Kältemittelrohr (591a) abgegebenes Kältemittel auf komprimierte Weise dem mindestens einen zweiten Kältemittelrohr (593a) zuführt; und
eine Expansionsvorrichtung (597), die das von dem mindestens einen zweiten Kältemittelrohr (593a) abgegebene Kältemittel zu dem mindestens einen ersten Kältemittelrohr (591a) bewegt, nachdem ein Druck des Kältemittels gesenkt wurde.

9. Wäschebehandlungsvorrichtung nach Anspruch 8, wobei der Zirkulationskanal (51) aufweist:
eine erste Montagevorrichtung (515), die den Wärmetauscher (59) trägt; und
eine zweite Montagevorrichtung (517), die ein unteres Ende des Filterrahmens (71) trägt, wobei die zweite Montagevorrichtung (517) an einer höheren Position als eine Position der ersten Montagevorrichtung (515) vorgesehen ist.

10. Wäschebehandlungsvorrichtung nach Anspruch 9, wobei der Zirkulationskanal (51, 53, 55) ferner aufweist:
eine Ablaufvorrichtung (25), die das Wasser innerhalb der Wäscheaufnahmevorrichtung (2, 3) abgibt; und
ein Abgaberohr (541), das die erste Montagevorrichtung (515) mit der Ablaufvorrichtung (25) verbindet.

## Revendications

1. Appareil de traitement de linge (100), comprenant :
un dispositif de logement de linge (2, 3) qui fournit un espace permettant de loger du linge ;
un passage de circulation (51, 53, 55) prévu à l'extérieur du dispositif de logement de linge (2, 3), et fournissant un espace dans lequel de l'air circule jusqu'à un intérieur du dispositif de logement de linge (2, 3) ;
un échangeur de chaleur (59) prévu dans le passage de circulation (51) ;
un dispositif de filtre (7) prévu dans le passage de circulation (51), qui filtre des corps étrangers introduits dans l'échangeur de chaleur (59) ; et
**caractérisé en ce que**
un laveur (75) est prévu entre l'échangeur de chaleur (59) et le dispositif de filtre (7) et pulvérise de l'eau de lavage sur chacun de l'échangeur de chaleur (59) et du dispositif de filtre (7),
dans lequel le dispositif de filtre (7) inclut un cadre de filtre (71) prévu au passage de circulation (51) et un filtre (73) prévu au cadre de filtre (71), qui filtre des corps étrangers, dans lequel le cadre de filtre (71) inclut :
un corps (711) agencé à un angle d'inclinaison par rapport à une ligne droite perpendiculaire à une surface inférieure du passage de circulation (51) ;
un guide (713) prévu sur une surface inférieure du corps (711), qui guide l'eau de lavage pulvérisée par le laveur (75) ; et
une surface ouverte (715) prévue à une extrémité du guide (713) par laquelle le guide (713) communique avec un conduit de décharge (520), dans lequel le guide (713) inclut une surface inclinée (7131) prévue sur une surface inférieure du guide (731) et inclinée vers la surface ouverte (715).

2. Appareil de traitement de linge selon la revendication 1, dans lequel le conduit de décharge (520) communique avec au moins l'un d'un dispositif de vidange (25), d'un dispositif d'évacuation (27), et d'un dispositif d'alimentation (29), qui sont fournis à une cuve (2) du dispositif de logement de linge (2, 3).

3. Appareil de traitement de linge selon l'une quelconque des revendications 1 à 2, dans lequel le laveur (75) inclut :
un corps de buse (751) ; et
un ou plusieurs trous de buse (753) qui pulvérisent de l'eau de lavage fournie à chacune de deux surfaces latérales du corps de buse (751) destinées à faire face à l'échangeur de chaleur (59) et au dispositif de filtre (7).

4. Appareil de traitement de linge selon la revendication 3, dans lequel le laveur (75) inclut en outre un dispositif d'alimentation d'eau (8) qui alimente de l'eau de lavage dans le corps de buse (751), et dans lequel le dispositif d'alimentation d'eau (8) inclut en outre un tuyau de déviation (83) qui dévie l'eau de lavage vers un ou plusieurs trous de buse (753) faisant face à l'échangeur de chaleur (59), et un ou plusieurs trous de buse (753) faisant face au dispositif de filtre (7).

5. Appareil de traitement de linge selon la revendication 1, dans lequel le laveur (75) inclut :
une portion de lavage d'échangeur de chaleur (755) qui pulvérise de l'eau de lavage vers l'échangeur de chaleur (59) ;
une portion de lavage de filtre (757) configurée pour pulvériser de l'eau de lavage vers le dispositif de filtre (7) ; et
un dispositif d'alimentation d'eau (81, 82) qui alimente de l'eau de lavage au laveur (75).

6. Appareil de traitement de linge selon la revendication 5, dans lequel le dispositif d'alimentation d'eau (81, 82) inclut :
un premier dispositif d'alimentation d'eau (81) qui alimente de l'eau de lavage à la portion de lavage d'échangeur de chaleur (755) ; et
un deuxième dispositif d'alimentation d'eau (82) qui alimente de l'eau de lavage à la portion de lavage de filtre (757).

7. Appareil de traitement de linge selon la revendication 6, dans lequel le premier dispositif d'alimentation d'eau (81) et le deuxième dispositif d'alimentation d'eau (82) fonctionnent indépendamment.

8. Appareil de traitement de linge selon l'une quelconque des revendications 1 à 7, dans lequel l'échangeur de chaleur (59) inclut :
au moins une première plaque d'échange de chaleur (591b) qui échange de la chaleur avec l'air à l'intérieur du passage de circulation (51) ;
au moins un premier tuyau de frigorigène (591a) fixé à l'au moins une première plaque d'échange de chaleur (591b) ;
au moins une deuxième plaque d'échange de chaleur (593b) prévue dans le passage de circulation (51), qui échange de la chaleur avec l'air ayant traversé l'au moins une première plaque d'échange de chaleur (591b) ;
au moins un deuxième tuyau de frigorigène (593a) fixé à l'au moins une première plaque d'échange de chaleur (591b) et à l'au moins une deuxième plaque d'échange de chaleur (593b) ;
un compresseur (595) qui alimente un frigorigène déchargé depuis l'au moins un premier tuyau de frigorigène (591a) à l'au moins un deuxième tuyau de frigorigène (593a) de manière comprimée ; et
un dispositif d'expansion (597) qui déplace le frigorigène déchargé de l'au moins un deuxième tuyau de frigorigène (593a), vers l'au moins un premier tuyau de frigorigène (591a), après l'abaissement d'une pression du frigorigène.

9. Appareil de traitement de linge selon la revendication 8, dans lequel le passage de circulation (51) inclut :
un premier dispositif de montage (515) qui supporte l'échangeur de chaleur (59) ; et
un deuxième dispositif de montage (517) qui supporte une extrémité inférieure du cadre de filtre (71), dans lequel le deuxième dispositif de montage (517) est prévu à une position plus haute qu'une position du premier dispositif de montage (515).

10. Appareil de traitement de linge selon la revendication 9, dans lequel le passage de circulation (51, 53, 55) inclut en outre :
un dispositif de vidange (25) qui décharge l'eau à l'intérieur du dispositif de logement de linge (2, 3) ; et
un tuyau de décharge (541) qui raccorde le premier dispositif de montage (515) au dispositif de vidange (25) .
